# EUROPÄISCHE PATENTSCHRIFT

(11) **EP 3 032 136 B1**
(45) Veröffentlichungstag und Bekanntmachung des Hinweises auf die Patenterteilung: **09.10.2019**
(21) Anmeldenummer: 15193020.3
(22) Anmeldetag: 04.11.2015
(51) Int. Cl.: F16F 13/10

(54) **HYDROLAGER**
HYDRAULIC BEARING
SUPPORT HYDRAULIQUE

(30) Priorität: 12.12.2014 DE 102014118502
(43) Veröffentlichungstag der Anmeldung: 15.06.2016
(73) Patentinhaber: Vibracoustic GmbH, 64293 Darmstadt (DE)
(72) Erfinder: Stöcker, Timo, 69502 Hemsbach (DE); Schemer, Thomas, 69469 Weinheim (DE); Philipp, Jan, 64683 Einhausen (DE)
(74) Vertreter: Flügel Preissner Schober Seidel

(56) Entgegenhaltungen:
- DE-A1- 10 037 954
- DE-A1- 10 213 826
- US-A1- 2013 056 918

## Beschreibung

Die Erfindung betrifft eine Lageranordnung umfassend ein Gehäuse und ein darin eingepresstes Hydrolager, mit einer Tragfeder, die ein Traglager abstützt, mit einer fluidgefüllten Arbeitskammer und einer Ausgleichskammer, die durch eine Trennwand getrennt und über einen Dämpfungskanal miteinander verbunden sind, und mit einem Außenring, an dem die Tragfeder anvulkanisiert ist, wobei der Außenring einen mit dem Gehäuse kraftschlüssig verbundenen ersten Befestigungsabschnitt aufweist.

Eine Lageranordnung der eingangs genannten Art ist aus DE 102 13 826 A1 bekannt. DE 102 13 826 A1 offenbart eine fluid-gefüllte Schwingungsdämpfungsvorrichtung mit einem elastischen Körper, der ein erstes und ein zweites Montageelement elastisch verbindet, um ein offenes Ende des zweiten Montageelementes fluiddicht zu schließen. Eine bewegbare Gummiplatte, die mit einem ersten Stützelement verbunden ist, und eine flexible Gummilage, die mit einem zweiten Stützelement verbunden ist, sind aneinander montiert und an dem anderen offenen Ende des zweiten Montageelementes durch Verstemmen fluiddicht derart befestigt, dass die bewegbare Gummiplatte zusammen mit dem elastischen Körper eine Hauptfluidkammer bildet und dass die bewegbare Gummiplatte zusammen mit der flexiblen Gummilage eine Hilfsfluidkammer bildet, die mit einem inkompressiblen Fluid gefüllt sind und durch einen Drosselkanal miteinander verbunden sind. Ein Trennelement, das in der Hilfsfluidkammer angeordnet ist, teilt die Hilfsfluidkammer in eine mittlere Kammer, die teilweise durch die bewegbare Gummiplatte definiert ist, und in eine Ausgleichskammer, die teilweise durch die flexible Gummilage definiert ist, die durch einen Fluidkanal miteinander verbunden sind, und es hat ein Eingriffsstück, das sich zu diesem ersten oder zu dem zweiten Stützelement erstreckt und mit diesem im Eingriff ist, so dass es an dem Element bei der Montage des Trennelementes vorläufig befestigt wird.

US 2013 / 0 056 918 A1 offenbart eine Motorhalterung mit einem inneren Kern, der einen Bolzenbefestigungsabschnitt mit einem daran befestigten Motorverbindungsbolzen und einen Anschlagabschnitt aufweist, der integral an einem unteren Ende des Bolzenbefestigungsabschnitts ausgebildet ist.

DE 100 37 954 A1 offenbart ein Hydrolager, das ein Traglager und ein Auflager, die durch einen im wesentlichen kegelstumpfförmigen ersten Federkörper aus elastomerem Werkstoff aufeinander abgestützt sind, und einen Arbeitsraum und einen Ausgleichsraum umfasst, die jeweils mit Dämpfungsflüssigkeit gefüllt und durch eine Trennwand voneinander getrennt sowie durch eine erste Dämpfungsöffnung flüssigkeitsleitend verbunden sind, wobei das Traglager als innerer erster Stützkörper ausgebildet ist, der von einem äußeren zweiten Stützkörper mit radialem Abstand umschlossen ist, wobei der erste und der zweite Stützkörper durch den ersten Federkörper und einen zweiten Federkörper verbunden sind, wobei der erste Federkörper und der zweite Federkörper wenigstens zwei mit Dämpfungsflüssigkeit gefüllte Kammern begrenzen und wobei die Kammern quer zu der Achse im Wesentlichen einander in radialer Richtung gegenüberliegend angeordnet und durch mindestens eine zweite Dämpfungsöffnung flüssigkeitsleitend verbunden sind.

Das Hydrolager, das aus US 7,325,795 B2 bekannt ist, weist einen Außenring mit einem ersten Befestigungsabschnitt und einem zweiten Befestigungsabschnitt auf. Der erste Befestigungsabschnitt ist mit Spiel zu dem Gehäuse ausgebildet und stützt das Hydrolager in axialer Richtung formschlüssig ab. Der zweite Befestigungsabschnitt ist mittels Presspassung in das Gehäuse eingefügt.

Ein ähnliches Hydrolager ist in DE 697 14 673 T2 offenbart. Im Unterschied zu dem vorgenannten Hydrolager haben der erste Befestigungsabschnitt und der zweite Befestigungsabschnitt einen unterschiedlichen Durchmesser.

Die bekannten Vorrichtungen weisen ein Spiel an wenigstens einem der Befestigungsabschnitte auf und sind damit in radialer Richtung nicht stabil. Unrundheiten der Lageraufnahme können so leicht das Hydrolager verformen, wodurch die inneren Bauteile ebenfalls verformt werden können. Dadurch kann die gewünschte Funktion beeinträchtigt werden.

Insgesamt ist somit die Anpassung der bekannten Vorrichtungen an unterschiedliche Motorgewichte aufwendig und teuer, da die Lager nur individuell für das jeweilige Motorgewicht hergestellt werden können. Zudem ergibt sich eine unangenehme Geräuschentwicklung aufgrund der Spielpassung.

Der Erfindung liegt die **Aufgabe** zugrunde, eine Lageranordnung vorzuschlagen, bei der die oben angeführten Probleme nicht auftreten.

Zur **Lösung** dieser Aufgabe wird eine Lageranordnung gemäß Patentanspruch 1 angegeben. Vorteilhafte Weiterbildungen der Erfindung sind Gegenstand der abhängigen Patentansprüche.

Erfindungsgemäß wird bei einer Lageranordnung der eingangs genannten Art vorgeschlagen, einen in axialer Richtung zwischen dem Hydrolager und dem Gehäuse angeordneten axialen Freibereich zum Einstellen der Anschraubposition des Traglagers vorzusehen, wobei der Außenring einen mit dem Gehäuse kraftschlüssig verbundenen zweiten Befestigungsabschnitt und einen zwischen dem ersten Befestigungsabschnitt und dem zweiten Befestigungsabschnitt angeordneten Taillenabschnitt aufweist.

Die Erfindung schafft eine Lageranordnung umfassend ein Gehäuse und ein darin eingepresstes Hydrolager. Das Hydrolager umfasst eine Tragfeder, eine fluidgefüllte Arbeitskammer und eine Ausgleichskammer sowie einen Außenring. Die Tragfeder stützt ein Traglager ab und ist an dem Außenring anvulkanisiert. Die Arbeitskammer und die Ausgleichskammer sind durch eine Trennwand getrennt und über einen Dämpfungskanal miteinander verbunden. Der Außenring weist einen ersten Befestigungsabschnitt, einen zweiten Befestigungsabschnitt und einen dazwischen angeordneten Taillenabschnitt auf. Der erste Befestigungsabschnitt und der zweite Befestigungsabschnitt sind mit dem Gehäuse kraftschlüssig verbunden. Ferner ist ein axialer Freibereich vorgesehen. Der axiale Freibereich ist in axialer Richtung betrachtet zwischen dem Hydrolager und dem Gehäuse angeordnet und zum Einstellen der Anschraubposition des Traglagers ausgebildet.

Vorteilhaft bilden der erste Befestigungsabschnitt und der zweite Befestigungsabschnitt mit dem Gehäuse jeweils eine Presspassung bildet. Der erste Befestigungsabschnitt kann einen kleineren Durchmesser als der zweite Befestigungsabschnitt aufweisen.

Der Außenring kann eine, insbesondere auf der radial äußeren Umfangsfläche angeordnete, Elastomerschicht aufweisen. Die Elastomerschicht kann auf der gesamten radial äußeren Umfangsfläche des Außenrings vorgesehen sein. Alternativ kann die Elastomerschicht lediglich auf der radial äußeren Umfangsfläche des zweiten Befestigungsabschnitts vorgesehen sein. Der Außenring kann einen von dem Taillenabschnitt begrenzten Zwischenraum aufweisen. Der Zwischenraum kann mit einem Elastomermaterial gefüllt sein.

Bei einer vorteilhaften Ausgestaltung weist der Taillenabschnitt einen in radialer Richtung verlaufenden Radialabschnitt auf. Alternativ oder zusätzlich kann der Taillenabschnitt einen unter einem spitzen Winkel zu der axialen Richtung verlaufenden Axialabschnitt aufweisen.

Vorzugsweise umfasst die Trennwand eine schaltbare Entkopplungsmembran. Ferner kann das Hydrolager einen Schaltmagneten aufweisen, der zum Schalten einer Entkopplungsmembran ausgebildet ist.

Das Gehäuse kann vorteilhaft einen Endanschlag für den Außenring aufweisen. Es kann ein vorzugsweise in axialer Richtung zwischen dem Hydrolager, insbesondere dem ersten Befestigungsabschnitt, und dem Gehäuse, insbesondere dem Endanschlag, angeordneter axialer Freibereich vorgesehen sein, der bevorzugt zum Einstellen der Anschraubposition des Traglagers dient.

Ausführungsformen der Erfindung können unter anderem nachfolgend beschriebene Vorteile verwirklichen.

In einem Lagerbaukasten sollen Lager bei einer Federrate aber unterschiedlichen Motorgewichten unter Belastung die gleiche Ruhelage haben, obwohl die Lager aufgrund verschiedener Motorgewichte unterschiedlich weit einfedern. Um nicht unterschiedliche Hydrolager bauen zu müssen, kann das Hydrolager je nach statischer Last unterschiedlich weit eingepresst werden. Ein Ziel dabei ist es, kardanische Kippbewegungen in Folge von Toleranzen zu vermeiden. Ein weiteres Ziel ist die Vermeidung von Schnarren in frei liegenden Bereichen.

Eine harte Feder, beispielsweise in Form einer Elastomerschicht, kann zur Isolation sehr hoher Frequenzen dienen. Im Zusammenspiel mit der Masse des Hydrolagers wird somit eine zusätzliche Hochfrequenzisolation, beispielsweise für Frequenzen über 500 Hz, mit wenig Aufwand und zu niedrigen Kosten ermöglicht.

Der Außenring hält das Hydrolager zusammen und hat zur Stabilisierung in radialer Richtung einen eingezogenen Taillenabschnitt. Der Taillenabschnitt kann auch zum Abstützen der Elastomertragfeder, zum Einstellen der Federraten und zum Einstellen der Federratenverhältnisse in verschiedenen Raumrichtungen verwendet werden. Gleichzeitig kann der Außenring ein Widerlager für die inneren hydraulischen Bauteile bilden, die durch ein Umformen des Außenringendes nach innen (Bördelung) befestigt werden. Zudem vermeidet das Einpressen des Hydrolagers in das Gehäuse, insbesondere unmittelbar neben einer Bördelung, im Allgemeinen eine Undichtigkeit.

Der Außenring ist im oberen und unteren Bereich in Verbindung mit dem Gehäuse vorteilhaft als Presspassung auslegt, so dass allein schon bedingt durch Toleranzen eine Einspannung der beiden Teile und damit ein fester Sitz ermöglicht wird. Die Presspassungen können durch denselben Durchmesser oben und unten oder auch durch unterschiedliche Durchmesser erzeugt werden.

Ist der Außenring aus Stahl gefertigt kann durch eine Elastomerschicht ein Korrosionsschutz und eine Doppelisolation erzeugt werden.

Durch den Verzicht auf eine axialen Anlage, wie im Stand der Technik üblich, kann über eine Positioniervorrichtung bei der Montage die richtige Lage des Hydrolagers in dem Gehäuse und damit auch der Anschraubposition des Traglagers in Abhängigkeit von Vorlast und Federrate erreicht werden. Somit können durch den gleichen Satz von Bauteilen und der entsprechend hierfür verwendeten Werkzeuge unterschiedliche Hydrolager weniger aufwendig hergestellt werden.

Wenngleich im klassischen Maschinenbau die Regel gilt, dass Doppelpassungen zu vermeiden sind, so überwiegen in diesem Fall zuvor genannten Vorteile. Insbesondere kann als weiterer Vorteil eine besonders stabile Verbindung in zwei Ringbereichen oberhalb und unterhalb der Taille erreicht werden.

Das Hydrolager wird mittels zwei Abschnitten am Außenring in ein Gehäuse eingepresst. Dabei können die Gehäuse für die rechte und linke Lagerposition unterschiedlich sein. Das Hydrolager ist dabei auf eine Feder ausgelegt, auch bei unterschiedlichen Lagerlasten und gleiche Federrate. Die richtige Position des Traglagers oder Lagerkerns wird durch die Außenring-Position mit Hilfe der Bohrungslänge in dem Gehäuse eingestellt. Dabei liegt das obere Außenringende nicht am Gehäuse an. Zur Stabilisierung des Außenrings dient eine Taille, auf deren Innenseite die Gummitragfeder abgestützt wird.

Das Hydrolager kann auch mittels zwei Abschnitten am Außenring in ein Gehäuse eingepresst werden, die unterschiedliche Durchmesser haben. Somit bleibt der Weg des Einpressens klein. Dabei können die Gehäuse für die rechte und linke Lagerposition im Fahrzeug unterschiedlich sein. Das Hydrolager ist dabei auf eine Feder ausgelegt, auch bei unterschiedlichen Lagerlasten und gleicher Federrate. Die richtige Position des Traglagers oder Lagerkerns wird durch die Außenring-Position mit Hilfe der Bohrungslänge im Gehäuse eingestellt. Dabei liegt das obere Außenringende axial nicht am Gehäuse an. Zur Stabilisierung des Außenrings dient eine Taille, auf deren Innenseite die Gummitragfeder abgestützt wird.

Sollte eine kardanische Beweglichkeit des Hydrolagers erwünscht sein, kann der Bördelbund auch außen gummiert sein. Das hilft unter anderem bei der Unterbrechung der Körperschallleitung von dem Schaltmagnet in das Gehäuse. In diesem Fall hat das Gehäuse im Bereich des Bördelbundes einen größeren Durchmesser, was das Einpressen des oberen Bereiches erleichtert, weil der Einpressweg klein ist.

Bei Stahlaußenringen kann zwecks kostenlosem Korrosionsschutz außen Gummi überlaufen gelassen werden. Diese etwa 1 mm bis 1,5 mm dicke Schicht wird vorzugsweise am Außenring mittels Haftvermittler fest gebunden. Dieses erlaubt ein Einpressen des inneren Lagers ohne Abreißen des Gummis. Wenn ein geeignetes Gleitmittel verwendet wird, das verdunstet und sich vom Gummi aufnehmen lässt, kann zudem ein fester Sitz erhalten werden.

Einen Gummiüberlauf auf dem Außenring des Hydrolagers kann auch definiert dicker ausgeführt werden, so dass eine harte Gummibuchse entsteht. Durch das Einpressen kann diese kalibriert werden (radiales Zusammendrücken der Gummischicht, meistens zur Kompensation von Schwundspannungen im Gummi bei innen und außen gebundenen Metallteilen). Die Gummibuchse kann damit belastbarer sein. Durch Abstimmen von Einpresslänge, Gummischichtdicke und Kalibriermaß kann eine Federrate und der Festsitz des Hydrolagers in dem Gehäuse eingestellt werden. Ist diese auf die Masse des Hydrolagers entsprechend abgestimmt, kann ein Hochfrequenztilger in Bereichen über 500 Hz erzeugt werden, der beispielsweise gegen Getriebeheulen wirkt. Will man einen besonders guten Sitz des Hydrolagers, bietet sich zudem die Nutzung eines Postbonding-Verfahrens an.

Ausführungsbeispiele der Erfindung werden nachfolgend anhand der beigefügten schematischen Zeichnungen erläutert. Darin zeigen:
- Fig. 1: einen Schnitt durch ein Ausführungsbeispiel eines Hydrolagers mit einem taillierten Außenring;
- Fig. 2: einen Schnitt durch ein weiteres Ausführungsbeispiel eines Hydrolagers mit unterschiedlichen Durchmessern der Befestigungsabschnitte;
- Fig. 3: einen Schnitt durch ein weiteres Ausführungsbeispiel eines Hydrolagers mit einer zusätzlichen Elastomerschicht;
- Fig. 4: einen Schnitt durch ein weiteres Ausführungsbeispiel eines Hydrolagers mit einer zusätzlichen Elastomerschicht und
- Fig. 5: einen Schnitt durch ein weiteres Ausführungsbeispiel eines Hydrolagers mit einer zusätzlichen Elastomerschicht und einem mit Elastomermaterial ausgefüllten Zwischenraum.

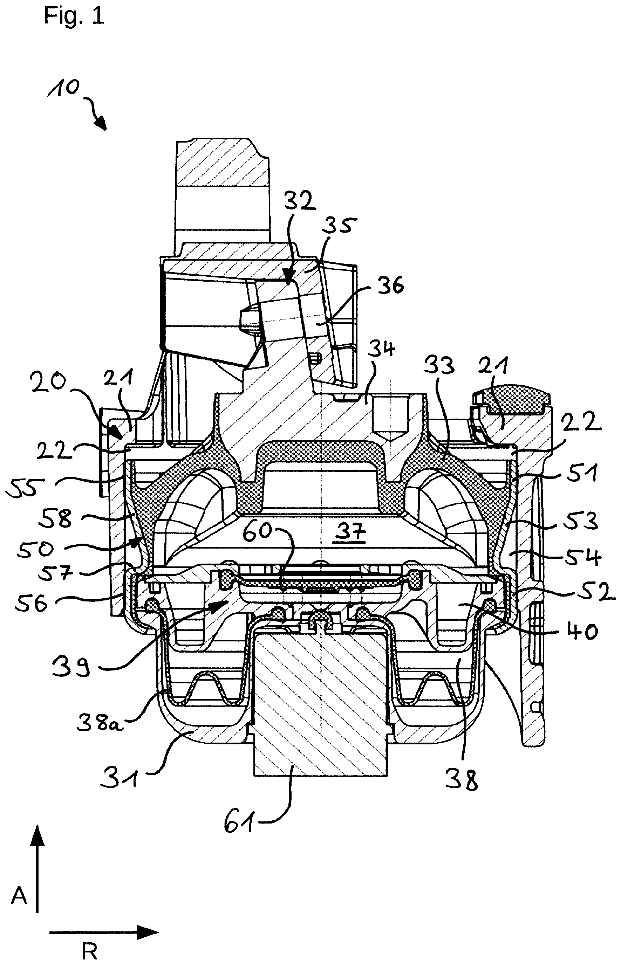

Fig. 1 zeigt ein Ausführungsbeispiel einer Lageranordnung mit einem Hydrolager 10 und einem Gehäuse 20.

Das Gehäuse 20 weist eine im Wesentlichen zylinderförmige Öffnung zum Aufnehmen des Hydrolagers 10 auf. Ferner hat das Gehäuse 20 einen Endanschlag 21. Der Endanschlag 21 springt in radialer Richtung R nach innen vor.

Das Hydrolager 10 weist ein Traglager 32 mit einem Lagerkern 34 auf, der in eine Tragfeder 33 aus einem elastomeren Material einvulkanisiert ist. Das Traglager 32 weist einen sich in der axialen Richtung A von dem Lagerkern 34 erstreckenden Lagerarm 35 auf, der mit einer Schrauböffnung 36 zum Befestigen eines, nicht dargestellten, Aggregates versehen ist.

Das Hydrolager 10 umfasst ferner eine fluidgefüllte Arbeitskammer 37 und eine Ausgleichskammer 38. Die Arbeitskammer 37 und die Ausgleichskammer 38 sind durch eine Trennwand 39 voneinander getrennt. In der Trennwand 39 ist ein Dämpfungskanal 40 vorgesehen, der die Arbeitskammer 37 mit der Ausgleichskammer 38 verbindet. Die Ausgleichskammer 38 wird von einer Ausgleichsmembran 38a begrenzt. In der Trennwand 39 ist eine schaltbare Entkopplungsmembran 60 vorgesehen. Die Entkopplungsmembran 60 ist durch einen Schaltmagneten 61, schaltbar. Die Ausgleichskammer 38 ist in einem Lagertopf 31 aufgenommen, der auch den Schaltmagneten 61 abstützt.

Das Hydrolager 10 weist einen Außenring 50 auf, der einen ersten Befestigungsabschnitt 51, einen zweiten Befestigungsabschnitt 52 und einen dazwischen angeordneten Taillenabschnitt 53 umfasst.

Der erste Befestigungsabschnitt 51 ist im Wesentlichen zylinderförmig ausgebildet und erstreckt sich in der axialen Richtung A. Der erste Befestigungsabschnitt 51 ist so ausgebildet, dass er mit dem Gehäuse 20 eine erste Presspassung 55 bilden kann.

Der zweite Befestigungsabschnitt 52 ist ebenfalls zylinderförmig ausgebildet und erstreckt sich in der axialen Richtung A. Der zweite Befestigungsabschnitt 52 ist ausgebildet, mit dem Gehäuse 20 eine zweite Presspassung 56 zu bilden. Bei dem vorliegenden Ausführungsbeispiel haben der erste Befestigungsabschnitt 51 und der zweite Befestigungsabschnitt 52 den gleichen Durchmesser.

Der Taillenabschnitt 53 verbindet den ersten Befestigungsabschnitt 51 mit dem zweiten Befestigungsabschnitt 52. Der Taillenabschnitt 53 weist einen Axialabschnitt 57 und einen Radialabschnitt 58 auf. Der Axialabschnitt 57 verläuft unter einem spitzen Winkel zu der axialen Richtung A von dem ersten Befestigungsabschnitt 51 in Richtung auf den zweiten Befestigungsabschnitt 52. Der Radialabschnitt 58 verläuft im Wesentlichen in der radialen Richtung R und verbindet den Axialabschnitt 57 mit dem zweiten Befestigungsabschnitt 52.

Der Taillenabschnitt 53 begrenzt auf einer Seite einen Zwischenraum 54. Im eingebauten Zustand des Hydrolagers 10 wird der Zwischenraum 54 zusätzlich von dem Gehäuse 20 begrenzt. Die Tragfeder 33 ist an dem Außenring 50 anvulkanisiert. Insbesondere ist die Tragfeder 33 an dem Taillenabschnitt 53 anvulkanisiert.

Nachfolgend wird der Zusammenbau der Lageranordnung erläutert. Das Hydrolager 10 wird von unten in das Gehäuse 20 eingepresst. Der erste Befestigungsabschnitt 51 und der zweite Befestigungsabschnitt 52 bilden mit dem Gehäuse 20 eine erste Presspassung 55 und eine zweite Presspassung 56, so dass das Hydrolager 10 in der axialen Richtung A kraftschlüssig gehalten ist. Zwischen dem ersten Befestigungsabschnitt 51 und dem Endanschlag 21 ist ein axialer Freibereich 22 ausgebildet.

Unterschiedliche Motorgewichte lassen das Traglager 32 unterschiedlich einfedern. In einem Lagerbausatz soll die Tragfeder jedoch vorzugsweise stets gleich ausgebildet sein. Die kraftschlüssige Verbindung des Hydrolagers 10 mit dem Gehäuse 20 und der axiale Freibereich 22 erlauben ein unterschiedliches axiales Einpressen des Hydrolagers 10 in das Gehäuse 20. Somit ist die Anschraubposition des Traglagers 32 durch unterschiedliche Einpresstiefen einstellbar.

Nachfolgend werden Varianten des Hydrolagers 10 beschrieben. Die Varianten werden nur insoweit beschrieben, als sie sich von dem zuvor beschriebenen Hydrolager 10 unterscheiden. Dabei werden bereits eingeführte Bezugszeichen für gleiche oder funktionsgleiche Teile verwendet.

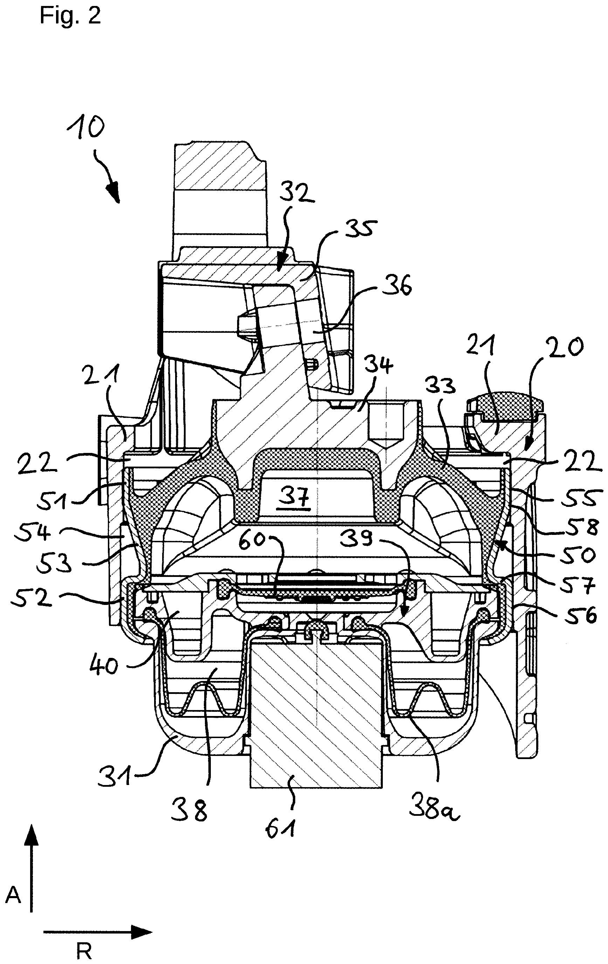

Fig. 2 zeigt eine Variante des Hydrolagers 10, bei dem der Außenring 50 unterschiedlich ausgebildet ist. Der erste Befestigungsabschnitt 51 weist einen kleineren Durchmesser als der zweite Befestigungsabschnitt 52 auf. Diese Ausführungsform des Hydrolagers 10 kann einfacher in das Gehäuse 20 eingepresst werden.

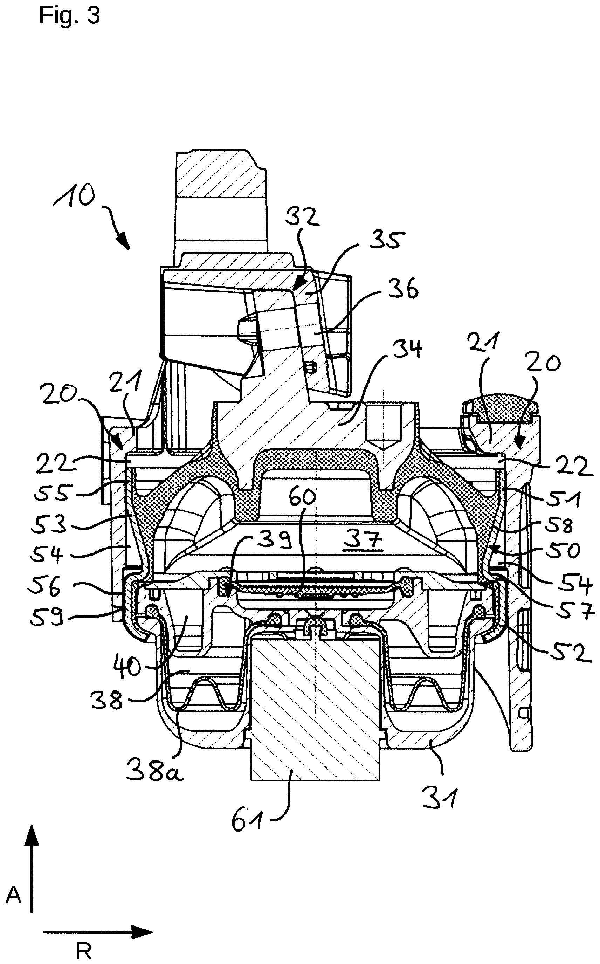

Bei der in Fig. 3 dargestellten Ausführungsform des Hydrolagers 10 ist der Außenring 50 zusätzlich mit einer Elastomerschicht 59 versehen. Die Elastomerschicht 59 bedeckt im Wesentlichen die radial äußere Umfangsfläche des zweiten Befestigungsabschnitts 52. Die Elastomerschicht 59 kann sich in der axialen Richtung A nach oben und nach unten über den zweiten Befestigungsabschnitt 52 hinaus erstrecken. Mittels der Elastomerschicht 59, die beispielsweise aus Gummi gefertigt ist, kann die Schallleitung von dem Schaltmagneten 61 in das Gehäuse 20 verringert werden.

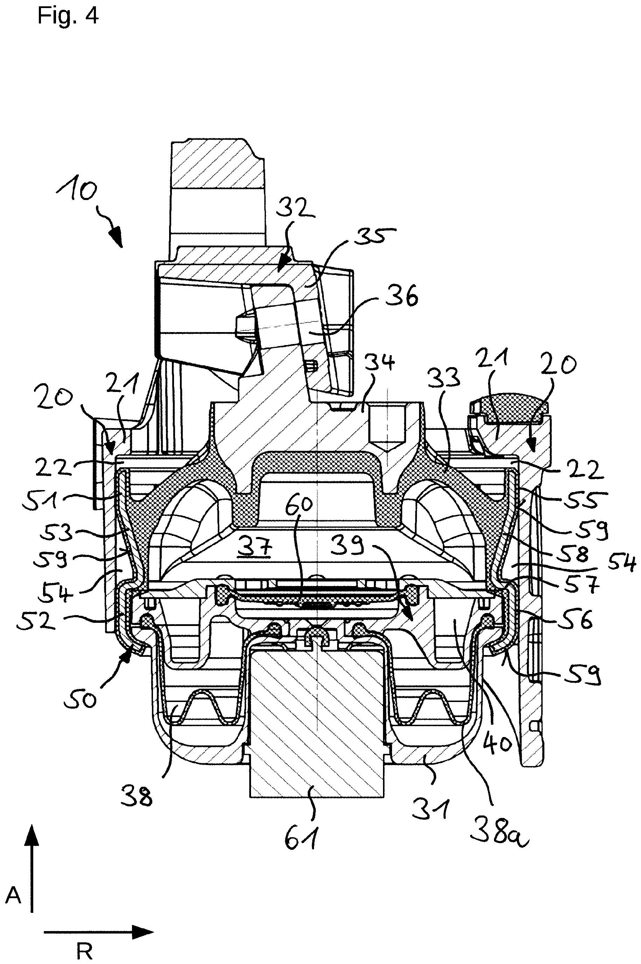

Bei der in Fig. 4 dargestellten Ausführungsform des Hydrolagers 10 ist der Außenring 50 auf seiner gesamten radial äußeren Umfangsfläche mit der Elastomerschicht 59 versehen. Die Unterdrückung der Schallleitung kann somit weiter verbessert werden.

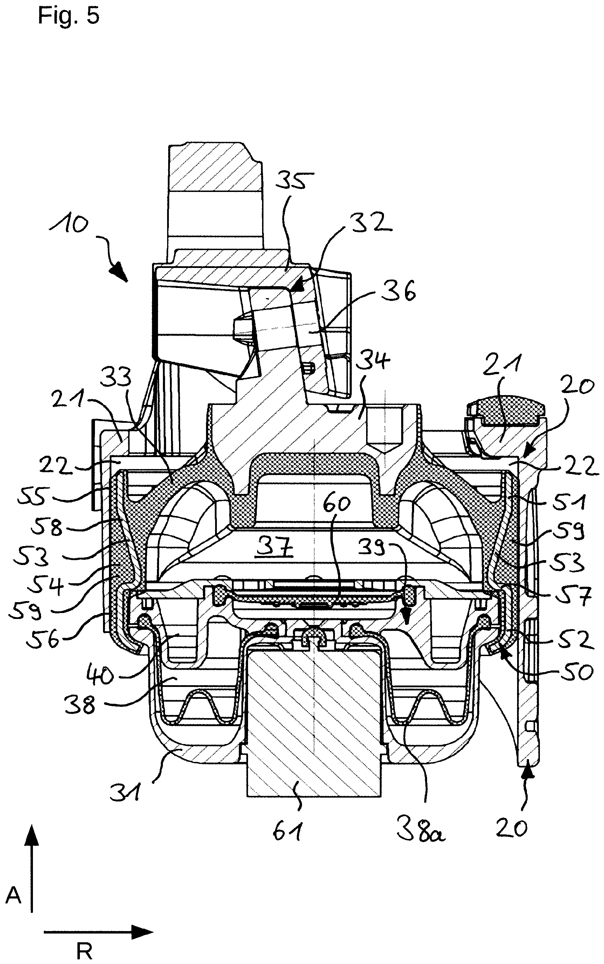

Bei der in Fig. 5 dargestellten Ausführungsform des Hydrolagers 10 ist zusätzlich zu der Elastomerschicht 59 der Zwischenraum 34 mit einem Elastomermaterial gefüllt. Mit anderen Worten ist der Außenring 50 derart mit einer Elastomerschicht 59 überzogen, dass eine zylinderförmige radial äußere Umfangsfläche aus dem Elastomermaterial 59 gebildet ist.

Das Gehäuse 20 hat eine Mehrpunktverschraubung (auch seitlich) an der Karosserie. Das Gehäuse 20 weist zudem einen Endanschlag 21 auf und das Hydrolager 10 wird so eingepresst, dass das Traglager 32 und der Lagerkern 34 unter statischer Last die Konstruktionslage einnimmt, egal ob die statische Einfederung größer oder kleiner ist. Durch den Kraftschluss zwischen dem Außenring 50 und dem Gehäuse 20 wird das Hydrolager 10 gehalten. Zur Stabilisierung dient dabei, dass sowohl im Tragfederanbindebereich wie auch im Bereich der innenliegenden Hydraulik eine Abstützung erfolgt. Dazwischen ist der Presssitz durch einen Taillenbereich 53 des Außenrings 50 unterbrochen, um ein Kippeln mit Geräuschentwicklung in Folge ungünstiger Toleranzen zu vermeiden. Der Taillenbereich 53 stabilisiert außerdem den Außenring 50 und erleichtert damit die Montage des Hydrolagers 10.

### Bezugszeichenliste

- 10: Hydrolager
- 20: Gehäuse
- 21: Endanschlag
- 22: axialer Freibereich
- 31: Lagertopf
- 32: Traglager
- 33: Tragfeder
- 34: Lagerkern
- 35: Lagerarm
- 36: Schrauböffnung
- 37: Arbeitskammer
- 38: Ausgleichskammer
- 38a: Ausgleichsmembran
- 39: Trennwand
- 40: Dämpfungskanal
- 50: Außenring
- 51: erster Befestigungsabschnitt
- 52: zweiter Befestigungsabschnitt
- 53: Taillenabschnitt
- 54: Zwischenraum
- 55: erste Presspassung
- 56: zweite Presspassung
- 57: Axialabschnitt
- 58: Radialabschnitt
- 59: Elastomerschicht
- 60: Entkopplungsmembran
- 61: Schaltmagnet
- A: axiale Richtung
- R: radiale Richtung

## Patentansprüche

1. Lageranordnung umfassend ein Gehäuse (20) und ein darin eingepresstes Hydrolager (10), mit einer Tragfeder (33), die ein Traglager (32) abstützt, mit einer fluidgefüllten Arbeitskammer (37) und einer Ausgleichskammer (38), die durch eine Trennwand (39) getrennt und über einen Dämpfungskanal (40) miteinander verbunden sind, und mit einem Außenring (50), an dem die Tragfeder (33) anvulkanisiert ist, wobei der Außenring (50) einen mit dem Gehäuse (20) kraftschlüssig verbundenen ersten Befestigungsabschnitt (51) aufweist, **gekennzeichnet durch** einen in axialer Richtung (A) zwischen dem Hydrolager (10) und dem Gehäuse (20) angeordneten axialen Freibereich (22) zum Einstellen der Anschraubposition des Traglagers (32), wobei der Außenring (50) einen mit dem Gehäuse (20) kraftschlüssig verbundenen zweiten Befestigungsabschnitt (52) und einen zwischen dem ersten Befestigungsabschnitt (51) und dem zweiten Befestigungsabschnitt (52) angeordneten Taillenabschnitt (53) aufweist.

2. Lageranordnung nach Anspruch 1, **dadurch gekennzeichnet, dass** der erste Befestigungsabschnitt (51) und der zweite Befestigungsabschnitt (52) mit dem Gehäuse (20) jeweils eine Presspassung (55, 56) bildet.

3. Lageranordnung nach Anspruch 1 oder 2, **dadurch gekennzeichnet, dass** der erste Befestigungsabschnitt (51) einen kleineren Durchmesser als der zweite Befestigungsabschnitt (52) aufweist.

4. Lageranordnung nach einem der Ansprüche 1 bis 3, **dadurch gekennzeichnet, dass** der Außenring (50) eine auf der radial äußeren Umfangsfläche angeordnete Elastomerschicht (59) aufweist.

5. Lageranordnung nach Anspruch 4, **dadurch gekennzeichnet, dass** die Elastomerschicht (59) auf der gesamten radial äußeren Umfangsfläche des Außenrings (50) oder lediglich auf der radial äußeren Umfangsfläche des zweiten Befestigungsabschnitts (52) vorgesehen ist.

6. Lageranordnung nach Anspruch 4 oder 5, **gekennzeichnet durch** einen von dem Taillenabschnitt (53) begrenzten und mit einem Elastomermaterial gefüllten Zwischenraum (54).

7. Lageranordnung nach einem der Ansprüche 1 bis 6, **dadurch gekennzeichnet, dass** der Taillenabschnitt (53) einen unter einem spitzen Winkel zu der axialen Richtung (A) verlaufenden Axialabschnitt (57) und einen in radialer Richtung (R) verlaufenden Radialabschnitt (58) aufweist.

8. Lageranordnung nach einem der Ansprüche 1 bis 7, **dadurch gekennzeichnet, dass** das Gehäuse (20) einen Endanschlag (21) für den Außenring (50) aufweist.

## Claims

1. Mount assembly comprising a housing (20) and a hydromount (10) press-fitted therein, having a support spring (33) supporting a support mount (32), having a fluid-filled working chamber (37) and a compensation chamber (38) which are separated by a partition wall (39) and connected to one another via a damping channel (40), and having an outer ring (50) to which the suspension spring (33) is vulcanised, the outer ring (50) having a first fastening section (51) which is connected to the housing (20) in a force-locking manner, **characterised by** an axial clearance area (22) disposed in the axial direction (A) between the hydromount (10) and the housing (20) for adjusting the screw-on position of the support mount (32), wherein the outer ring (50) has a second fastening section (52) connected to the housing (20) in a force-locking manner and a waist section (53) disposed between the first fastening section (51) and the second fastening section (52).

2. Mount assembly according to claim 1, **characterised in that** the first fastening section (51) and the second fastening section (52) each form a press fit (55, 56) with the housing (20).

3. Mount assembly according to claim 1 or 2 **characterised in that** the first fastening section (51) has a smaller diameter than the second fastening section (52).

4. Mount assembly according to any one of claims 1 to 3, **characterised in that** the outer ring (50) has an elastomeric layer (59) disposed on the radially outer peripheral surface.

5. Mount assembly according to claim 4, **characterised in that** the elastomeric layer (59) is provided on the entire radially outer circumferential surface of the outer ring (50) or only on the radially outer circumferential surface of the second fastening portion (52).

6. Mount assembly according to claim 4 or 5, **characterised by** an intermediate space (54) limited by the waist section (53) and filled with an elastomeric material.

7. Mount assembly according to any one of claims 1 to 6, **characterised in that** the waist portion (53) comprises an axial portion (57) extending at an acute angle to the axial direction (A) and a radial portion (58) extending in the radial direction (R).

8. Mount assembly according to any one of claims 1 to 7, **characterised in that** the housing (20) has an end stop (21) for the outer ring (50).

## Revendications

1. Agencement formant support incluant un boîtier (20) et un support hydraulique (10) engagé à la presse dans celui-ci, comprenant un ressort porteur (33), qui soutient un support porteur (32), comportant une chambre de travail (37) remplie de fluide et une chambre de compensation (38), qui sont séparées par une cloison de séparation (39) et qui sont reliées l'une à l'autre via un canal d'amortissement (40), et comprenant une bague extérieure (50) sur laquelle le ressort porteur (33) est rapporté par vulcanisation, dans lequel la bague extérieure (50) comprend une première portion de fixation (51) reliée au boîtier (20) par coopération de forces,
**caractérisé par**
une zone axiale libre (22) agencée en direction axiale (A) entre le support hydraulique (10) et le boîtier (20) afin d'ajuster la position de vissage du support porteur (32), dans lequel la bague extérieure (50) comprend une seconde portion de fixation (52) reliée au boîtier (20) par coopération de forces, et une portion rétrécie (53) agencée entre la première portion de fixation (51) et la seconde portion de fixation (52).

2. Agencement formant support selon la revendication 1, **caractérisé en ce que** la première portion de fixation (51) et la seconde portion de fixation (52) forment conjointement avec le boîtier (20) respectivement un ajustement par pressage (55, 56).

3. Agencement formant support selon la revendication 1 ou 2, **caractérisé en ce que** la première portion de fixation (51) a un diamètre plus petit que la seconde portion de fixation (52).

4. Agencement formant support selon l'une des revendications 1 à 3,
**caractérisé en ce que** la bague extérieure (50) comprend une couche en élastomère (59) agencée sur la surface périphérique radialement extérieure.

5. Agencement formant support selon la revendication 4, **caractérisé en ce que** la couche en élastomère (59) est prévue sur la totalité de la surface périphérique radialement extérieure de la bague extérieure (50) ou uniquement sur la surface périphérique radialement extérieure de la seconde portion de fixation (52).

6. Agencement formant support selon la revendication 4 ou 5, **caractérisé par** un espace intermédiaire (54) délimité par la portion rétrécie (53) et rempli avec un matériau élastomère.

7. Agencement formant support selon l'une des revendications 1 à 6,
**caractérisé en ce que** la portion rétrécie (53) comprend une portion axiale (57) qui s'étend sous un angle aigu par rapport à la direction axiale (A), et une portion radiale (58) qui s'étend en direction radiale (R).

8. Agencement formant support selon l'une des revendications 1 à 7,
**caractérisé en ce que** le boîtier (20) comporte une butée finale (21) pour la bague extérieure (50).
